# EUROPÄISCHE PATENTANMELDUNG

(11) **EP 1 389 757 A2**
(43) Veröffentlichungstag der Anmeldung: **18.02.2004**
(21) Anmeldenummer: 03017817.2
(22) Anmeldetag: 05.08.2003
(51) Int. Cl.: G06F 9/445

(54) **Laden eines komprimierten Anwendungsprogramms mittels eines unkomprimierten Startprogramms**

(30) Priorität: 08.08.2002 DE 10236571
(71) Anmelder: EADS Astrium GmbH, 81663 München (DE)
(72) Erfinder: Krauss,, Peter A., Dr., 81737 München (DE)
(74) Vertreter: Ulrich, Thomas

(57) **Zusammenfassung**

Beschrieben wird ein Verfahren zum Betrieb einer Datenverarbeitungseinrichtung unter Verwendung datentechnisch komprimierter Daten, wobei ein nicht komprimiertes Startprogramm in einen flüchtigen Arbeitsspeicher geladen wird, welches ein Kopieren eines datentechnisch komprimierten Anwendungsprogramms aus einem Datenspeicher in einen flüchtigen Arbeitsspeicher unter gleichzeitiger Dekompression des Anwendungsprogramms initiiert.

## Beschreibung

Die vorliegende Erfindung betrifft ein Verfahren zum Betrieb einer Datenverarbeitungseinrichtung unter Verwendung datentechnisch komprimierter Daten. Solche Verfahren sind beispielsweise aus US 5,600,766 und US 6,023,761 bekannt.

US 5,600,766 beschreibt die datentechnisch komprimierte Speicherung einer Graphik in einem PROM-Speicher, Initialisierung eines Einschalt-Selbsttests, Dekompression der Graphik, Kopieren der dekomprimierten Graphik in einen RAM-Speicher und Anzeigen der dekomprimierten Graphik während des Selbsttests.

US 6,023,761 beschreibt einen Dekompressionsalgorithmus, der zusammen mit einem Hauptprogramm in einem nicht-flüchtigen Speicher gespeichert ist. Der Dekompressionsalgorithmus dekomprimiert vorbelegte Daten des Hauptprogramms und kopiert sie in den flüchtigen Speicher. Das Hauptprogramm, das in unkomprimierter Form vorliegt, verbleibt im nicht-flüchtigen Speicher.

Aufgabe der vorliegenden Erfindung ist es, ein alternatives Verfahren zum Betrieb einer Datenverarbeitungseinrichtung unter Verwendung komprimierter Daten bereitzustellen.

Diese Aufgabe wird gelöst durch die Merkmale des Patentanspruchs 1. Patentanspruch 7 und 8 umfassen jeweils eine spezielle Verwendung des erfindungsgemäßen Verfahrens. Patentanspruch 10 umfasst ein Computer-Programm, Patentanspruch 11 ein Computer-Programm-Produkt.

Die Erfindung umfasst ein Verfahren zum Betrieb einer Datenverarbeitungseinrichtung unter Verwendung datentechnisch komprimierter Daten. Als Datenverarbeitungseinrichtung ist jegliche Einrichtung zu verstehen, die Daten gleich in welcher Form oder Art verarbeitet. Daten im Sinne der Erfindung sind alle Arten von Daten wie beispielsweise so genannter Programmcode, Hilfsdaten zur Ausführung eines Programmcodes oder Verarbeitungsdaten, die mit Hilfe eines Programmcodes verarbeitet werden. Gemäß der vorliegenden Erfindung umfasst das erfindungsgemäße Verfahren folgenden Schritte:
- Laden eines nicht komprimierten Startprogramms aus einem ersten Datenspeicher in einen flüchtigen Arbeitsspeicher,
- Ausführen des Startprogramms,
- durch das Startprogramm initiiertes Kopieren eines datentechnisch komprimierten Anwendungsprogramms aus einem zweiten Datenspeicher in einen flüchtigen Arbeitsspeicher unter gleichzeitiger Dekompression des Anwendungsprogramms und
- Starten des Anwendungsprogramms durch das Startprogramm.

Der Arbeitsspeicher kann unterschiedlich strukturiert sein. Er kann entweder als einheitlicher Speicher ausgebildet sein oder er kann auch durch zwei oder mehr funktionell und/oder baulich getrennte Speicher gebildet werden, von denen mindestens einer als Programmspeicher ausgebildet ist zur Speicherung von Daten in Form eines Programmcodes und gegebenenfalls einigen zur Ausführung des Programmcodes erforderlichen Daten und mindestens einer als Datenspeicher ausgebildet ist zur Speicherung von sonstigen Daten ausgenommen von Programmcodes, also zur Speicherung von Verarbeitungsdaten, Hilfsdaten etc.

Das Laden des Startprogramms kann bevorzugt von einer Startvorgangs-Steuereinrichtung kontrolliert werden, welche baulich und/oder funktionell von einer Prozessor-Einrichtung der Datenverarbeitungseinrichtung getrennt ist. Damit kann diese spezielle Startvorgangs-Steuereinrichtung für die Kontrolle des Ladens des Startprogramms optimiert werden und es muss nicht diese Aufgabe zusätzlich von einer generellen Prozessor-Einrichtung der Datenverarbeitungseinrichtung übernommen werden, die damit für andere Datenverarbeitungsschritte optimiert werden kann.

Insbesondere kann vorgesehen werden, dass als Datenspeicher des Startprogramms ein erster nicht-flüchtiger Speicher der Datenverarbeitungseinrichtung verwendet wird und als Datenspeicher des Anwendungsprogramms ein zweiter nicht-flüchtiger Speicher der Datenverarbeitungseinrichtung verwendet wird. Einer der nicht-flüchtigen Speicher oder auch beide nicht-flüchtige Speicher können auch als veränderlich-nicht-flüchtige Speicher ausgebildet sein. Veränderlich-nicht-flüchtig bedeutet, dass z.B. bei einem Ausschalten der Datenverarbeitungseinrichtung die Daten in diesem Speicher erhalten bleiben, aber der Dateninhalt des Speichers prinzipiell verändert werden kann. In diesem Fall sind also allgemein sowohl der Datenspeicher für das Startprogramm als auch der Datenspeicher für das Anwendungsprogramm als Teil der Datenverarbeitungseinrichtung ausgebildet.

Alternativ kann aber auch vorgesehen werden, dass über eine Schnittstelleneinrichtung der Datenverarbeitungseinrichtung auf den ersten Datenspeicher und/oder auf den zweiten Datenspeicher zugegriffen wird. So kann beispielsweise vorgesehen werden, dass als Datenspeicher des Startprogramms ein nicht-flüchtiger Speicher der Datenverarbeitungseinrichtung verwendet wird und das Anwendungsprogramms über eine Schnittstelleneinrichtung der Datenverarbeitungseinrichtung aus einem zweiten Datenspeicher kopiert wird. In diesem Fall ist also allgemein der Datenspeicher für das Startprogramm als Teil der Datenverarbeitungseinrichtung ausgebildet, der Datenspeicher für das Anwendungsprogramm ist jedoch nicht als Teil der Datenverarbeitungseinrichtung ausgebildet, sondern es wird über eine Schnittstelleneinrichtung auf einen externen Datenspeicher zugegriffen, um das Anwendungsprogramm zu kopieren. Dies kann grundsätzlich aber auch in umgekehrter Weise erfolgen, so dass der Datenspeicher für das Anwendungsprogramm als Teil der Datenverarbeitungseinrichtung ausgebildet, der Datenspeicher für das Startprogramm jedoch nicht als Teil der Datenverarbeitungseinrichtung ausgebildet ist, sondern über eine Schnittstelleneinrichtung auf einen externen Datenspeicher zugegriffen wird, um auf das Startprogramm zuzugreifen.

Eine bevorzugte Weiterbildung des erfindungsgemäßen Verfahrens sieht vor, dass im Rahmen der Dekompression des Anwendungsprogramms Dekompressions-Informationen für definierte Segmente des Anwendungsprogramms gelesen werden und Parameter des Dekompressionsschrittes für jedes Segment auf Basis der zugehörigen Dekompressions-Informationen angepasst werden. Die Segmente können beispielsweise in Datenpakete eingebettet sein, die z.B. einen ersten Datenbereich mit Steuer- und Dekompressions-Informationen, einen zweiten Datenbereich mit Daten des Anwendungsprogramms und einen dritten Datenbereich mit Fehlererkennungs-Informationen enthalten.

Insbesondere kann ein erfindungsgemäßes Verfahren, wie es vorstehend beschrieben wurde, in einer Bordrechner-Einrichtung eines Raumfahrzeuges verwendet werden. Ein solches Raumfahrzeug kann entweder eine Trägerrakete, eine Raumfähre, ein Satellit oder eine Raumsonde sein. Alternativ kann aber auch eine Verwendung eines erfindungsgemäßen Verfahrens in einer Satellitennavigations-Empfängereinrichtung vorgesehen werden. Diese kann grundsätzlich als feste Bodenstation auf der Erde oder als mobile Satellitennavigations-Empfängereinrichtung ausgebildet sein, die entweder tragbar ausgebildet ist oder in einer beliebigen Art von Land-, Wasser-, Luft- oder Raumfahrzeug eingebaut ist. Insbesondere kann also ein erfindungsgemäßes Verfahren in einer Satellitennavigations-Empfängereinrichtung verwendet werden, die an Bord eines Raumfahrzeuges betrieben wird. Als Raumfahrzeuge kommen wiederum die vorgenannten Arten von Raumfahrzeugen in Frage.

Die Erfindung umfasst weiterhin ein Computer-Programm zur Verarbeitung von Daten einer Datenverarbeitungseinrichtung, wobei das Computer-Programm als maschinenlesbares Startprogramm ausgebildet ist. Das Computer-Programm ist weiterhin ausgebildet zur Durchführung folgender Verfahrensschritte:
- Kopieren eines datentechnisch komprimierten Anwendungsprogramms aus einem Datenspeicher in einen flüchtigen Arbeitsspeicher unter gleichzeitiger Dekompression des Anwendungsprogramms und
- Starten des Anwendungsprogramms durch das Startproramm.

Schließlich umfasst die Erfindung ein Computer-Programm-Produkt, beinhaltend einen maschinenlesbaren Programmträger, auf dem ein Computer-Programm nach Anspruch 10 in Form von elektronisch auslesbaren Steuersignalen gespeichert ist. Die Steuersignale können in jeder geeigneten Form gespeichert sein, die elektronische Auslesung kann dann entsprechend durch elektrische, magnetische, elektromagnetische, elektrooptische oder sonstige elektronische Verfahren erfolgen. Beispiele für solche Programmträger sind Magnetbänder, Disketten, Festplatten, CD-ROM oder Halbleiterbausteine.

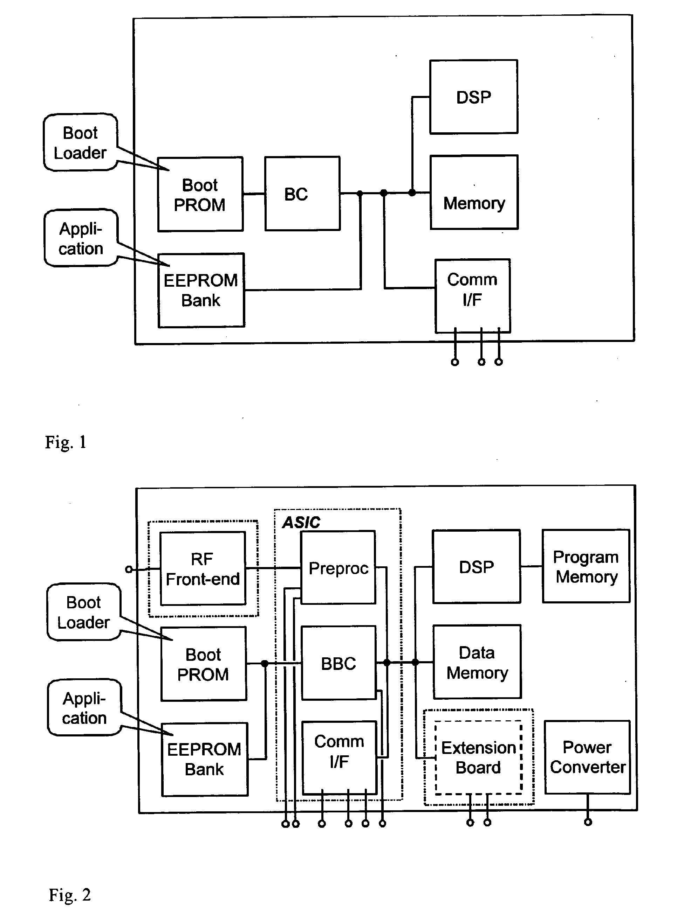

Ein spezielles Ausführungsbeispiel der vorliegenden Erfindung wird nachfolgend anhand der Figuren 1 und 2 erläutert. Es zeigen:
- Fig. 1:: Schematische Darstellung einer Datenverarbeitungseinrichtung
- Fig. 2:: Schematische Darstellung einer Satellitennavigations-Empfängereinrichtung

Das beschriebene Verfahren kann allgemein bei jeder Art von Datenverarbeitungseinrichtung, insbesondere bei jedem Computersystem angewendet werden, bei dem Anwendungsprogramme in Form von Software in einen Arbeitsspeicher geladen werden. Die Anwendung des beschriebenen Verfahrens ermöglicht es, die Größe der zu ladenden Software zu reduzieren und damit den Platzbedarf zu deren persistenten Speicherung und auch die Zeit zum Laden des Anwendungsprogrammes zu reduzieren. Eine solche Datenverarbeitungseinrichtung ist schematisch in Fig. 1 dargestellt.

Ein spezielles Anwendungsgebiet für das beschriebene Verfahren ist der Einsatz in einer Bordrechner-Einrichtung bzw. in einer Satellitennavigations-Empfängereinrichtung (GNSS), beispielsweise für GPS. Fig. 2 zeigt beispielhaft vor allem eine Rechnereinrichtung eines Satellitennavigations-Empfängers, wie er beispielsweise an Bord eines Raumfahrzeuges oder auch in anderen Satellitennavigations-Einrichtungen verwendet werden kann. Diese Empfänger-/Rechnereinrichtung dient zum Empfang und zur Auswertung von Satellitennavigationssignalen.

Fig. 1 zeigt in schematischer Darstellung ein spezielles Ausführungsbeispiel für die einzelnen Module einer Datenverarbeitungseinrichtung und deren Zusammenwirken. Die folgenden Module sind insbesondere zur Umsetzung des beschriebenen Verfahrens ausgebildet:
a) Eine CPU ausgebildet zur digitalen Datenverarbeitung.
b) Das Memory ist der Arbeitsspeicher (RAM) für die CPU.
c) Das Boot PROM als nicht-flüchtiger Speicher beinhaltet ein Startprogramm (Boot Loader).
d) Die EEPROM Bank als veränderlich-nicht-flüchtiger Speicher beinhaltet ein Anwendungsprogramm (Application) in komprimierter Form.
e) Optional kann eine Steuereinrichtung (BC) vorgesehen werden, die den Startvorgang kontrolliert (Boot Controller). Der BC kann als Teil eines integrierten Schaltkreises (z.B. ASIC oder FPGA) ausgebildet sein.
f) Eine Schnittstelleneinrichtung (Comm I/F) ermöglicht über verschiedene Schnittstellen den Datenaustausch mit anderen Systemen.

Ein Anwendungsprogramm wird bei entsprechendem Bedarf in einen Arbeitsspeicher geladen. Beispiele für einen solchen Bedarf sind beim Einschalten oder beim Zurücksetzen (Reset) einer Datenverarbeitungseinrichtung nach Fig. 1. Beim Einschalten oder Zurücksetzen (Reset) der Datenverarbeitungseinrichtung erfolgt im vorliegenden Beispiel der Start der Datenverarbeitungseinrichtung inklusive der Funktionalitäten des Anwendungsprogramms in drei Phasen, in denen bevorzugt unterschiedliche Komponenten die Ausführung des gesamten Ablaufes kontrollieren. In der ersten Phase ist die Kontrolle bei der Steuereinrichtung (Boot Controller), in der zweiten Phase bei dem Startprogramm (Boot Loader) und in der dritten Phase bei dem Anwendungsprogramm (Application).

Die erste Phase der Kontrolle durch die Steuereinrichtung kann wie folgt ablaufen:
a) Die CPU wird nach dem Einschalten oder Reset in einem speziellen Reset-Modus gehalten.
b) Der Boot Controller kopiert den Boot Loader aus dem Boot PROM in das Memory. Der Boot Loader liegt im Boot PROM in nicht komprimierter Form und wird deswegen direkt im Memory abgelegt.
c) Die CPU wird von dem Boot Controller aus dem Reset-Modus entlassen und führt den Boot Loader aus.

Die Art der Implementierung des Boot Controllers und dessen detaillierte Arbeitsweise haben keinen direkten Einfluß auf die hier diskutierte Anwendung des Verfahrens. Entscheidend ist, dass der Boot Loader in den Arbeitsspeicher der CPU geladen wurde und von dort aus die Arbeit in der Phase 2 beginnt.

Die zweite Phase der Kontrolle durch das Startprogramm (Boot Loader) kann wie folgt ablaufen:
d) Der Boot Loader kopiert das Anwendungsprogramm (Application) aus der EEPROM Bank in das Memory. Während dieses Umkopierens wird das Anwendungsprogramm gleichzeitig dekomprimiert. Durch die direkte, simultan durchgeführte Dekompression wird vermieden, zusätzlichen Speicherplatz für die Zwischenlagerung des geladenen, aber noch komprimierten Anwendungsprogramms bereithalten zu müssen.
   Als Alternative zum Laden des Anwendungsprogramms aus der EEPROM Bank kann der Boot Loader die Applikation auch über eine der Schnittstellen der Schnittstelleneinrichtung (Comm I/F) laden. Diese Möglichkeit einer zweiten oder alternativen Quelle für das Anwendungsprogramm kann beispielsweise genutzt werden für den Fall, wenn das in der EEPROM Bank abgelegte Anwendungsprogramm in sich fehlerhaft ist oder der Inhalt der EEPROM Bank korrumpiert wurde. Auch in dem Fall, dass die Applikation über die Schnittstelleneinrichtung (Comm I/F) geladen wird statt aus der EEPROM Bank, findet die gleiche Dekompression statt. Es wurde insbesondere eine Dekompression ausgewählt, die nur wenig Rechenzeit erfordert, um bei der Datenübertragung mit üblichen Geschwindigkeiten Schritt halten zu können,
e) Wenn das gesamte Anwendungsprogramm geladen und dekomprimiert wurde, beendet der Boot Loader seine eigene Arbeit mit dem Start des Anwendungsprogramms.
   Die Dekompression findet also ausschließlich in dieser Phase 2 statt. Damit haben spätere Abläufe in dem Anwendungsprogramm keine Bedeutung für die Dekompression.
   Die dritte Phase der Kontrolle durch das Anwendungsprogramm läuft dann wie folgt ab:
f) Das Anwendungsprogramm beginnt mit der eigentlichen Arbeit, für die das Computersystem gedacht ist.

Fig. 2 zeigt in schematischer Darstellung ein weiteres spezielles Ausführungsbeispiel für die einzelnen Module einer Satellitennavigations-Empfängereinrichtung und deren Zusammenwirken. Die folgenden Module sind insbesondere zur Umsetzung des beschriebenen Verfahrens ausgebildet:
a) Der DSP ist eine CPU, die insbesondere für eine digitale Signalverarbeitung optimiert ist. Ein Beispiel für solche digitalen Signale sind Navigationssignale. Der DSP kann aber auch allgemeine Rechenoperationen durchführen.
b) Das Program Memory und Data Memory sind die Arbeitsspeicher (RAM) für den DSP. Das Program Memory ist als Programmspeicher ausgebildet zur Speicherung von Daten in Form eines Programmcodes und gegebenenfalls einigen zur Ausführung des Programmcodes erforderlichen Daten. Das Data Memory ist als Datenspeicher ausgebildet ist zur Speicherung von sonstigen Daten ausgenommen von Programmcodes, also zur Speicherung von Verarbeitungsdaten, Hilfsdaten etc.
c) Das Boot PROM beinhaltet ein Startprogramm (Boot Loader).
d) Die EEPROM Bank beinhaltet ein Anwendungsprogramm (Application) in komprimierter Form.
e) Optional kann eine Steuereinrichtung (BBC) vorgesehen werden, die den Startvorgang kontrolliert (Boot Controller) und dem DSP den Zugriff auf das Boot PROM und die EEPROM Bank ermöglicht (Board Controller). Der BBC kann als Teil eines integrierten Schaltkreises (z.B. ASIC oder FPGA) ausgebildet sein.
f) Eine Schnittstelleneinrichtung (Comm I/F) ermöglicht über verschiedene Schnittstellen den Datenaustausch mit anderen Systemen.

Ein Anwendungsprogramm wird bei entsprechendem Bedarf in einen Arbeitsspeicher geladen. Beispiele für einen solchen Bedarf sind beim Einschalten oder beim Zurücksetzen (Reset) eines Empfängers nach Fig. 2. Beim Einschalten oder Zurücksetzen (Reset) des Empfängers erfolgt im vorliegenden Beispiel der Start des Empfängers inklusive der Funktionalitäten des Anwendungsprogramms in drei Phasen, in denen bevorzugt unterschiedliche Komponenten die Ausführung des gesamten Ablaufes kontrollieren. In der ersten Phase ist die Kontrolle bei der Steuereinrichtung (Boot Controller) als Teil des BBC, in der zweiten Phase bei dem Startprogramm (Boot Loader) und in der dritten Phase bei dem Anwendungsprogramm (Application).

Die erste Phase der Kontrolle durch die Steuereinrichtung kann, weitgehend analog dem Beispiel nach Fig. 1, wie folgt ablaufen:
a) Der DSP wird nach dem Einschalten oder Reset in einem speziellen Reset-Modus gehalten.
b) Der Boot Controller kopiert den Boot Loader aus dem Boot PROM in das Program Memory. Der Boot Loader liegt im Boot PROM in nicht komprimierter Form und wird deswegen direkt im Program Memory abgelegt.
c) Der DSP wird von dem Boot Controller aus dem Reset-Modus entlassen und führt den Boot Loader aus.

Die Art der Implementierung des Boot Controllers und dessen detaillierte Arbeitsweise haben auch hier keinen direkten Einfluß auf die hier diskutierte Anwendung des Verfahrens. Entscheidend ist, dass der Boot Loader in den Arbeitsspeicher des DSP geladen wurde und von dort aus die Arbeit in der Phase 2 beginnt.

Die zweite Phase der Kontrolle durch das Startprogramm (Boot Loader) kann wie folgt ablaufen:
d) Der Boot Loader kopiert aus der EEPROM Bank das komprimierte Anwendungsprogramm, wobei während dieses Umkopierens das Anwendungsprogramm gleichzeitig dekomprimiert wird. Anschließend wird zumindest der Programmcode des Anwendungsprogramms (Application) in das Program Memory abgespeichert und gegebenenfalls zusätzliche erforderliche Daten des Anwendungsprogramms können in das Data Memory abgespeichert werden. Durch die direkte, simultan durchgeführte Dekompression wird vermieden, zusätzlichen Speicherplatz für die Zwischenlagerung des geladenen, aber noch komprimierte Anwendungsprogramms bereithalten zu müssen.
   Als Alternative zum Laden des Anwendungsprogramms aus der EEPROM Bank kann auch hier der Boot Loader die Applikation auch über eine der Schnittstellen der Schnittstelleneinrichtung (Comm I/F) laden. Diese Möglichkeit einer zweiten oder alternativen Quelle für das Anwendungsprogramm kann beispielsweise genutzt werden für den Fall, wenn das in der EEPROM Bank abgelegte Anwendungsprogramm in sich fehlerhaft ist oder der Inhalt der EEPROM Bank korrumpiert wurde. Auch in dem Fall, dass die Applikation über die Schnittstelleneinrichtung (Comm I/F) geladen wird statt aus der EEPROM Bank, findet die gleiche Dekompression statt. Es wurde insbesondere eine Dekompression ausgewählt, die nur wenig Rechenzeit erfordert, um bei der Datenübertragung mit üblichen Geschwindigkeiten Schritt halten zu können.
e) Wenn das gesamte Anwendungsprogramm geladen und dekomprimiert wurde, beendet der Boot Loader seine eigene Arbeit mit dem Start des Anwendungsprogramms.
   Die Dekompression findet also wiederum ausschließlich in dieser Phase 2 statt. Damit haben spätere Abläufe in dem Anwendungsprogramm keine Bedeutung für die Dekompression.
   Die dritte Phase der Kontrolle durch das Anwendungsprogramm läuft dann wie folgt ab:
f) Das Anwendungsprogramm beginnt mit der eigentlichen Arbeit, für die die Satellitennnavigations-Emfpängereinrichtung ausgelegt ist.

Der Algorithmus zur Dekompression soll so einfach wie möglich sein, um eine leichte und damit fehlerfreie Implementierung zu ermöglichen. Wenn die Applikation in einer EEPROM Bank gehalten wird, können Fehler in der Applikation jederzeit korrigiert werden. Aber der Inhalt eines Boot PROMs ist nicht mehr abänderbar, was insbesondere bei einer Anwendung des beschriebenen Verfahrens in einem Raumfahrzeug besondere Maßnahmen erfordert, da nach einem Start des Raumfahrzeuges der Inhalt des Boot PROMs nicht mehr mit vertretbarem Aufwand beeinflusst werden kann.

Insbesondere an dem speziellen Beispiel der Verarbeitung von Satelliten-Navigationsdaten ergab die Analyse der entsprechenden Anwendungsprogramme, dass durch den Einsatz von Kompressionsverfahren erheblich die Größe reduziert werden kann. Ein spezielles Verfahren zur Kompression, das die besten Ergebnisse liefert, ist das LZSS-Verfahren. Die nachfolgend dargestellte Tabelle führt die erreichbaren Kompressionsfaktoren für mehrere Kompressionsverfahren im Vergleich auf. Bezugswert ist dabei das unkomprimierte Anwendungsprogramm mit 100 %. Die beiden Verfahren Run Length Encoding und LZSS sind in der Literatur allgemein bekannt. Nach Anwendung eines dieser Verfahren, bevorzugt eines LZSS-Verfahrens, zur Kompression wird dann die Dekompression als geeignete Umkehrung der Kompression durchgeführt.

**Tabelle:**

| Erreichbare Kompressionsfaktoren | | |
|---|---|---|
| Verfahren | Größe [Byte] | Größe [%] |
| Keine Kompression | 288711 | 100 % |
| Run Length Encoding | 111638 | 39 % |
| LZSS mit Standard Parameter | 68268 | 24 % |
| LZSS mit optimierten Parameter | 46165 | 16 % |

Durch die Kompression eines Anwendungsprogramms ergeben sich folgende Vorteile: Durch den Einsatz der Kompression reduziert sich die Größe des Anwendungsprogramms, wenn dieses vor Ausführung gespeichert oder übertragen wird. Die sich ergebenden Vorteile sind:
a) Die EEPROM Bank oder ein entsprechender externer Speicher kann verkleinert werden. Es werden weniger Speicherbausteine benötigt, entsprechend weniger Bausteine müssen bestückt und getestet werden. Dadurch reduziert sich der Herstellungspreis des Computersystems.
b) Bei gegebener Größe der EEPROM Bank oder eines externen Speichers kann deren Kapazität effektiver genutzt werden. Es können beispielsweise zusätzlich weitere Anwendungen abgespeichert werden. Dadurch erhöhen sich die Einsatzmöglichkeiten des Computersystems.
c) Die Zugriffszeit auf die EEPROM Bank ist wesentlich höher als auf den Arbeitsspeicher. Durch das beschriebene Verfahren reduziert sich jedoch trotz notwendiger Dekomprimierung insgesamt die Zeit zum Laden des Anwendungsprogramms. Dadurch wird der Startvorgang schneller ausgeführt, das Computersystem ist nach dem Einschalten schneller rechenbereit.
d) Wenn das Anwendungsprogramm alternativ über eine Kommunikationsschnittstelle von extern geladen wird, reduziert sich die Zeit zur Datenübertragung und damit auch die Fehlerauftrittsmöglichkeiten.

Der Einsatz von weiteren Algorithmen wie beispielsweise zur Berechnung und Überprüfung von Prüfsummen zur Entdeckung und gegebenenfalls Korrektur von Übertragungs- oder Speicherfehlern ist unabhängig von der Anwendung der Kompression weiterhin jederzeit möglich.

Die Anwendung des beschriebenen Verfahrens ist nicht auf Satellitennavigations-Empfänger bzw. Bordrechner beschränkt. Das Verfahren kann auch bei ähnlichen DSP- bzw. CPU-basierten Computersystemen eingesetzt werden. Mit einfacher Anpassung an andere CPU-Typen ist auch auf anderen Computersystemen eine sinnvolle Nutzung des beschriebenen Verfahrens möglich.

### Abkürzungen:

- ASIC: Application Specific Integrated Circuit
- BBC: Board & Boot Controller
- CPU: Central Processing Unit
- DSP: Digital Signal Processor
- EEPROM: Erasable EPROM
- EPROM: Electrical PROM
- FPGA: Field Programmable Gate Array
- GNSS: Global Navigation Satellite System
- GPS: Global Positioning System
- I/F: Interface
- LZSS: Lempel Ziv Storer Szymanski
- PROM: Programmable ROM
- RAM: Random Access Memory
- RF: Radio Frequencz
- RLE: Run Length Encoding
- ROM: Read Only Memory

## Patentansprüche

1. Verfahren zum Betrieb einer Datenverarbeitungseinrichtung unter Verwendung datentechnisch komprimierter Daten, **gekennzeichnet durch** folgenden Schritte:
- Laden eines nicht komprimierten Startprogramms aus einem ersten Datenspeicher in einen flüchtigen Arbeitsspeicher,
- Ausführen des Startprogramms,
- **durch** das Startprogramm initiiertes Kopieren eines datentechnisch komprimierten Anwendungsprogramms aus einem zweiten Datenspeicher in einen flüchtigen Arbeitsspeicher unter gleichzeitiger Dekompression des Anwendungsprogramms und
- Starten des Anwendungsprogramms **durch** das Startprograrnm.

2. Verfahren nach Anspruch 1, **dadurch gekennzeichnet, dass** das Laden des Startprogramms von einer Startvorgangs-Steuereinrichtung kontrolliert wird, welche baulich und/oder funktionell von einer Prozessor-Einrichtung der Datenverarbeitungseinrichtung getrennt ist.

3. Verfahren nach Anspruch 1 oder 2, **dadurch gekennzeichnet, dass** als Datenspeicher des Startprogramms ein erster nicht-flüchtiger Speicher der Datenverarbeitungseinrichtung verwendet wird und als Datenspeicher des Anwendungsprogramms ein zweiter nicht-flüchtiger Speicher der Datenverarbeitungseinrichtung verwendet wird.

4. Verfahren nach Anspruch 1 oder 2, **dadurch gekennzeichnet, dass** über eine Schnittstelleneinrichtung der Datenverarbeitungseinrichtung auf den ersten Datenspeicher und/oder auf den zweiten Datenspeicher zugegriffen wird.

5. Verfahren nach Anspruch 4, **dadurch gekennzeichnet, dass** als Datenspeicher des Startprogramms ein nicht-flüchtiger Speicher der Datenverarbeitungseinrichtung verwendet wird und das Anwendungsprogramm über eine Schnittstelleneinrichtung der Datenverarbeitungseinrichtung aus einem zweiten Datenspeicher kopiert wird.

6. Verfahren nach einem der Ansprüche 1 bis 5, **dadurch gekennzeichnet, dass** im Rahmen der Dekompression des Anwendungsprogramms Dekompressionsinformationen für definierte Segmente des Anwendungsprogramms gelesen werden und Parameter des Dekompressionsschrittes für jedes Segment auf Basis der zugehörigen Dekompressions-Informationen angepasst werden.

7. Verwendung eines Verfahrens nach einem der Ansprüche 1 bis 6 in einer Bordrechner-Einrichtung eines Raumfahrzeuges.

8. Verwendung eines Verfahrens nach einem der Ansprüche 1 bis 6 in einer Satellitennavigations-Empfängereinrichtung.

9. Verwendung gemäß Anspruch 8 in einer Satellitennavigations-Empfängereinrichtung eines Raumfahrzeuges.

10. Computer-Programm zur Verarbeitung von Daten einer Datenverarbeitungseinrichtung, ausgebildet als maschinenlesbares Startprogramm und weiterhin ausgebildet zur Durchführung folgender Verfahrensschritte:
- Kopieren eines datentechnisch komprimierten Anwendungsprogramms aus einem Datenspeicher in einen flüchtigen Arbeitsspeicher unter gleichzeitiger Dekompression des Anwendungsprogramms und
- Starten des Anwendungsprogramms durch das Startprogramm.

11. Computer-Programm-Produkt beinhaltend einen maschinenlesbaren Programmträger, auf dem ein Computer-Programm nach Anspruch 10 in Form von elektronisch auslesbaren Steuersignalen gespeichert ist.
